# EUROPÄISCHE PATENTSCHRIFT

(11) **EP 3 702 212 B1**
(45) Veröffentlichungstag und Bekanntmachung des Hinweises auf die Patenterteilung: **03.03.2021**
(21) Anmeldenummer: 20159954.5
(22) Anmeldetag: 28.02.2020
(51) Int. Cl.: B60P 7/12, B60P 7/15

(54) **LADUNGSEINHEIT SÄULENFÖRMIGER TRANSPORTBEHÄLTER, ANORDNUNG VON LADUNGSEINHEITEN UND VERFAHREN ZUR LADUNGSSICHERUNG**
LOAD UNIT OF COLUMN-SHAPED TRANSPORT CONTAINERS, ASSEMBLY OF LOAD UNITS AND METHOD FOR SECURING LOAD
UNITÉ DE CHARGE DE RÉCIPIENTS DE TRANSPORT EN FORME DE COLONNE, ENSEMBLE D'UNITÉS DE CHARGE ET PROCÉDÉ DE SÉCURISATION DE CHARGE

(30) Priorität: 01.03.2019 DE 102019105261
(43) Veröffentlichungstag der Anmeldung: 02.09.2020
(73) Patentinhaber: Sunpor Kunststoff GmbH, 3105 St. Pölten (AT)
(72) Erfinder: Pedevilla, Clemens, 3143 Pyhra (AT); Zogg, Rolf, 3100 St. Pölten (AT)
(74) Vertreter: Michalski Hüttermann & Partner Patentanwälte mbB

(56) Entgegenhaltungen:
- DE-U1-202006 015 899
- DE-U1-202009 015 886
- US-A1- 2010 172 710

## Beschreibung

Die vorliegende Erfindung betrifft eine Ladungseinheit, eine Anordnung solcher Ladungseinheiten und ein Verfahren zur Ladungssicherung säulenförmiger Transportbehälter.

Säulenförmige Transportbehälter finden häufig Anwendung beim Transport und der Lagerung von Schüttgütern. Beispielsweise werden dabei häufig sogenannte Oktabins verwendet. Bei Oktabins handelt es sich um säulenförmige Verpackungsbehälter mit achteckiger Grundfläche und achtseitiger Mantelfläche, die im Wesentlichen aus Wellpappe hergestellt sind. Oktabins werden dabei stehend auf der achteckigen Grundfläche zumeist auf Transportpaletten transportiert. Sie bieten den Vorteil, dass sie kostengünstig hergestellt werden können, manuell zusammengebaut werden können, leer flach gepackt werden können, trotzdem vergleichsweise stabil sind, gut gestapelt werden könne und gut rezyklierbar sind.

Ein Problem bei der Verwendung von säulenförmigen Transportbehältern für den Transport von Schüttgütern ist jedoch die Sicherung der Transportbehälter auf der Ladefläche des Transporters gegen horizontale Beschleunigungen. Dabei ist ein Problem, dass die Schüttgüter in den Transportbehältern sich insbesondere bei ruckartigen Beschleunigungen wie Fluide verhalten und träge in den Transportbehältern hin- und herschwappen können. Sind die Transportbehälter nicht ausreichend gesichert, können diese beispielsweise bei Bremsmanövern oder Kurvenfahrten umkippen oder verrutschen. Zudem können die Seitenwände der Transportbehälter eingedrückt werden oder einreißen. Auch der Deckel der Transportbehälter kann eingedrückt werden oder einreißen, wodurch eine Stapelung der Transportbehälter nach dem Transport nicht mehr möglich sein kann.

Bekannte Methoden zur Ladungssicherung verwenden beispielsweise besonders gefertigte Befestigungsmittel, die häufig ausschließlich für die Sicherung von Oktabins oder anderen säulenförmigen Transportbehältern teuer angeschafft werden müssen oder nur sehr aufwändig angebracht werden können. Andere Methoden führen häufig trotzdem zum Eindrücken oder Einreißen der Transportbehälter, sowie Ladungsverschub und Kippen und Neigen der Oktabins.

DE 20 2009 015886 U1 beschreibt eine Ladegutsicherung für aufrecht stehende Gegenstände, Behälter und dgl., insbesondere für Oktabins, auf der Ladefläche eines Transportfahrzeugs, mit zwei in die Struktur des Fahrzeugaufbaus mit Abstand voneinander eingliederbaren Querbalken, zwischen denen das zu sichernde Ladegut angeordnet ist, mit mindestens zwei Ladegutsicherungsgurten, die vom in Fahrtrichtung vorderen Querbalken zu dem hinteren Querbalken, das Ladegut seitlich umgreifend über den hinteren Querbalken geführt sind, die das Ladegut hinten umgreifen und dort überkreuzend geführt sind und die von hinten das Ladegut zumindest teilweise seitlich umgreifend nach vorn geführt sind, wo sie seitlich des Ladeguts ladebodenseitig festgelegt und verspannt sind.

US 2010/172710 A1 beschreibt eine Kabelbaumanordnung zum Zurückhalten von Fracht mit einem relativ hohen Schwerpunkt umfassend erste und zweite Verbindungsringe und vier Zugelemente. Zwei der vier Elemente bilden einen gegabelten Kabelbaum, wenn sie mit den Verbindungsringen verbunden sind. Das dritte und vierte Zugelement haben jeweils ein Ringende und ein Ankerende. Die Ringenden sind mit den Verbindungsringen verbunden. Der gegabelte Gurt mit einem oben berührenden Element und einem seitlich berührenden Element berührt jeweils ein oberes Ende und einen seitlichen Teil der positionierten Fracht.

Die Ankerenden verankern das dritte und vierte Zugelement an einer Tragstruktur wie einem Triebwagenboden. Das dritte und vierte Zugelement lenken dadurch die Spannung diagonal in den gegabelten Gurt relativ zur Stützstruktur, um das obere Ende der Fracht in Richtung der Stützstruktur und den Seitenteil der Fracht in Richtung der Ankerenden zu drücken.

DE 20 2006 015899 U1 beschreibt Sicherungsmittel für Schüttgutbehälter, insbesondere Oktabins, mit einer den Schüttgutbehälter umfangseitig um- und kopfseitig übergreifenden Sicherungsfläche.

Die Ladungssicherung von säulenförmigen Transportbehältern kann deswegen noch Verbesserungspotential bieten.

Es ist daher die Aufgabe der vorliegenden Erfindung, eine verbesserte Möglichkeit zur Ladungssicherung säulenförmiger Transportbehälter bereitzustellen.

Gelöst wird diese Aufgabe durch eine Ladungseinheit gemäß Anspruch 1, eine Anordnung gemäß Anspruch 5 und ein Verfahren gemäß Anspruch 10. Bevorzugte Ausgestaltungen der Erfindung sind in den Unteransprüchen, in der Beschreibung oder den Figuren angegeben.

Mit der Erfindung wird eine Ladungseinheit säulenförmiger Transportbehälter vorgeschlagen, wobei die Ladungseinheit auf einer im Wesentlichen rechteckigen Ladefläche angeordnet ist, wobei die Ladefläche eine erste Längsseite, eine zweite Längsseite, eine Stirnseite und eine Heckseite aufweist, wobei eine Längsrichtung von der Heckseite zur Stirnseite verläuft und eine Querrichtung von der ersten Längsseite zur zweiten Längsseite verläuft,

wobei die Ladungseinheit eine Mehrzahl säulenförmiger Transportbehälter und eine Mehrzahl im Wesentlichen rechteckiger, vorzugsweise quadratischer Transportpaletten (Grundmaß 114x114cm) aufweist, wobei die Transportpaletten entlang der Längsrichtung und/oder Querrichtung im Wesentlichen in Flucht zueinander auf der Ladefläche angeordnet sind, wobei jeweils höchstens zwei der Transportpaletten entlang der Längsrichtung und jeweils höchstens zwei der Transportpaletten entlang der Querrichtung hintereinander angeordnet sind, wobei auf jeder Transportpalette jeweils einer der säulenförmigen Transportbehälter zu der jeweiligen Transportpalette in Längsrichtung verschiebungssicher angeordnet ist, wobei die Ladungseinheit in Längsrichtung vor jedem Transportbehälter zumindest einen Sicherungsbalken aufweist, wobei der Sicherungsbalken in Querrichtung ausgerichtet ist und unterhalb einer Oberkante der Ladungseinheit und oberhalb eines Schwerpunktes der Ladungseinheit angeordnet ist, wobei der Sicherungsbalken zur Ladefläche in Längsrichtung verschiebungssicher befestigt ist, wobei die Ladungseinheit ein erstes und ein zweites verkürzbares Sicherungsmittel aufweist, wobei das erste verkürzbare Sicherungsmittel an einem vorderen ersten Zugpunkt hinter einer Vorderkante der Ladungseinheit an der ersten Längsseite der Ladefläche und an einem hinteren ersten Zugpunkt vor einer Hinterkante der Ladungseinheit an der ersten Längsseite der Ladefläche lösbar befestigt ist, wobei das erste verkürzbare Sicherungsmittel von dem vorderen ersten Zugpunkt zum hinteren ersten Zugpunkt im Wesentlichen an der Ladungseinheit anliegend um die Ladungseinheit verläuft, wobei das erste verkürzbare Sicherungsmittel an der Seite der zweiten Längsseite oberhalb von zumindest einem Sicherungsbalken verläuft, wobei das zweite verkürzbare Sicherungsmittel an einem vorderen zweiten Zugpunkt hinter der Vorderkante der Ladungseinheit an der zweiten Längsseite der Ladefläche und an einem hinteren zweiten Zugpunkt vor der Hinterkante der Ladungseinheit an der zweiten Längsseite der Ladefläche lösbar befestigt ist, wobei das zweite verkürzbare Sicherungsmittel von dem vorderen zweiten Zugpunkt zum hinteren zweiten Zugpunkt im Wesentlichen an der Ladungseinheit anliegend um die Ladungseinheit verläuft, wobei das zweite verkürzbare Sicherungsmittel an der Seite der ersten Längsseite oberhalb von zumindest einem Sicherungsbalken verläuft, wobei die Vorderkante der Ladungseinheit die in Längsrichtung der Heckseite zugewandte Kante der Ladungseinheit ist und die Hinterkante der Ladungseinheit die in Längsrichtung der Stirnseite zugewandte Kante der Ladungseinheit ist.

Eine vorbeschriebene Ladungseinheit dient somit insbesondere der Ladungssicherung säulenförmiger Transportbehälter.

Es hat sich in überraschender Weise gezeigt, dass mit einer vorbeschriebenen Ladungseinheit die Ladungssicherung säulenförmiger Transportbehälter mit wenigen und üblicherweise verfügbaren Mitteln gut gelingt. Zudem hat sich gezeigt, dass die Transportbehälter einer derartigen Ladungseinheit kaum oder gar nicht eingedrückt werden.

Unter dem Begriff "säulenförmiger Transportbehälter" sind im Sinne der Erfindung Behälter zu verstehen die zum Transport dienen können und eine Säulenform aufweisen. Unter Säulenform ist im Wesentlichen die Form eines geraden Prismas oder senkrechten Kreiszylinders zu verstehen. Das bedeutet, dass die säulenförmigen Transportbehälter zwei mehreckige oder kreisförmige Grundflächen aufweisen und eine sich im Wesentlichen orthogonal zu den Grundflächen erstreckenden Mantelfläche, die die Grundflächen verbindet. In dem säulenförmigen Transportbehälter befindet sich dabei zumindest ein Hohlraum, der ein zu transportierendes Gut aufnehmen kann. Das zu transportierende Gut kann dabei insbesondere ein Schüttgut sein. Zudem kann ein säulenförmiger Transportbehälter üblicherweise zumindest eine verschließbare Öffnung aufweisen, durch die das zu transportierende Gut eingefüllt und entnommen werden kann. Die verschließbare Öffnung kann dabei auch eine gesamte obere Grundfläche des Transportbehälters sein. Unter einem säulenförmigen Transportbehälter kann deswegen auch ein oben offener Transportbehälter verstanden werden. Üblicherweise werden derartige Transportbehälter aber zumindest während des Transportes mit einem Deckel geschlossen. Unter einem säulenförmigen Transportbehälter kann zudem auch eine Mehrzahl von Transportbehältern verstanden werden, die in einer Gruppe angeordnet sind, die nach Außen eine Säulenform aufweist. Der Begriff der säulenförmigen Transportbehälter ist dabei nicht auf das Material der Transportbehälter begrenzt. Prinzipiell können die Transportbehälter aus geeignetem Material sein. Säulenförmige Transportbehälter umfassen dabei insbesondere Behälter aus Pappe, Kunststoff und/oder Metall. Insbesondere umfasst der Begriff "säulenförmige Transportbehälter" sogenannte Oktabins.

Unter dem Begriff "im Wesentlichen rechteckige Transportpalette" sind im Sinne der Erfindung Paletten zu verstehen, die zum Transport dienen und dabei eine im Wesentlichen rechteckige, vorzugsweise quadratische Form aufweisen. Darunter sind insbesondere Handelsübliche standardisierte Transportpaletten zu verstehen, die mit Flurfördergeräten bewegt und verladen werden können. Dabei können die Transportpaletten Einweg- oder Mehrwegpaletten sein und aus verschiedenen Materialien wie beispielsweise Holz, Pappe, Kunststoff und oder Metall gefertigt sein. Insbesondere umfasst der Begriff auch Europoolpaletten.

Im Detail weist eine erfindungsgemäße Ladungseinheit : säulenförmige Transportbehälter auf Dabei ist die Ladungseinheit auf einer im Wesentlichen rechteckigen Ladefläche angeordnet. Die Ladefläche weist eine erste Längsseite, eine zweite Längsseite, eine Stirnseite und eine Heckseite auf, wobei eine Längsrichtung von der Heckseite zur Stirnseite verläuft und eine Querrichtung von der ersten Längsseite zur zweiten Längsseite verläuft.

Die Ladefläche kann beispielsweise die Ladefläche eines Lastkraftwagens, eines Sattelaufliegers, eines Anhängers oder eines Containers sein. Dabei können die Heckseite und die Stirnseite insbesondere die beiden gegenüberliegenden kürzeren Seiten der Ladefläche sein. Die Längsrichtung kann dabei vorzugsweise in Fahrtrichtung des Transportfahrzeuges verlaufen, kann aber auch in eine andere Richtung orientiert sein.

Erfindungsgemäß weist die Ladungseinheit dabei eine Mehrzahl säulenförmiger Transportbehälter und eine Mehrzahl im Wesentlichen rechteckiger, vorzugsweise quadratischer Transportpaletten auf, wobei die Transportpaletten entlang der Längsrichtung und/oder Querrichtung im Wesentlichen in Flucht zueinander auf der Ladefläche angeordnet sind.

Unter dem Begriff "im Wesentlichen in Flucht zueinander" ist zu verstehen, dass parallel an den Seiten der Transportpaletten verlaufende Fluchtlinien hintereinander angeordneter Transportpaletten aufeinander fallen. In anderen Worten bedeutet dies, dass die Transportpaletten alle achsenparallel zur Ladefläche angeordnet sind und auf der Ladefläche eine Parkettierung oder Kachelung bilden. Insbesondere kann darunter verstanden werden, dass die Transportpaletten flächendeckend im Wesentlichen aneinander anliegend angeordnet sind. Vorzugsweise können die Transportpaletten der Mehrzahl im Wesentlichen rechteckiger, vorzugsweise quadratischer Transportpaletten deswegen alle im Wesentlichen die gleiche Größe aufweisen.

Dadurch kann vorteilhafter weise erreicht werden, dass ein besonders großer Anteil der Ladefläche genutzt wird.

Es ist dabei vorgesehen, dass jeweils höchstens zwei der Transportpaletten entlang der Längsrichtung und jeweils höchstens zwei der Transportpaletten entlang der Querrichtung hintereinander angeordnet sind. Dies bezieht sich auf die Umschlingung des 2-teiligen verkürzbaren Sicherungsmittels.

In anderen Worten ist darunter zu verstehen, dass eine Ladungseinheit zwei oder vier Transportpaletten aufweisen kann, wobei nicht mehr als zwei Transportpaletten in jede Richtung hintereinander angeordnet sind. Die Ladefläche und/oder die Transportpaletten können dabei vorzugsweise so gewählt sein, dass die Heckseite und/oder Stirnseite der Ladefläche im Wesentlichen nur wenig mehr als doppelt so lang ist wie eine Breite der im Wesentlichen rechteckigen Transportpaletten, so dass eine Breite der Ladungseinheit in Querrichtung höchstens so groß ist wie die Heckseite und/oder Stirnseite der Ladefläche.

Dadurch kann vorteilhafter Weise erreicht werden, dass die Ladungseinheiten eine Größe aufweisen, die es erlaubt, dass jede Transportpalette an zwei Seiten für die Sicherung zugänglich ist. Dadurch kann eine Sicherung in Längs- und Querrichtung erreicht werden. Dabei ist ferner vorgesehen, dass auf jeder Transportpalette jeweils einer der säulenförmigen Transportbehälter zu der jeweiligen Transportpalette in Längsrichtung und Querrichtung verschiebungssicher angeordnet ist.

Unter "verschiebungssicher angeordnet" ist zu verstehen, dass der säulenförmige Transportbehälter durch beim Transport übliche horizontale Krafteinwirkung nicht auf der Transportpalette in Längsrichtung und Querrichtung verschoben werden kann. Unter Verschieben wird dabei insbesondere kein Kippen verstanden. Eine verschiebungssichere Anordnung kann dabei beispielsweise realisiert werden durch Sperren, die vor und hinter einer Transportpalette angeordnet sind. Beispielsweise kann vorgesehen sein, dass eine Platte in Längsrichtung vor und eine Platte in Längsrichtung hinter den Transportpaletten angeordnet ist. Die Platte kann beispielsweise im Wesentlichen rechteckig sein und mit einer Seite auf der Ladefläche aufliegen. Dabei kann die Platte an die Transportpalette angeklemmt sein beziehungsweise zwischen der Transportpalette und beispielsweise einer nächsten oder vorherigen Transportpalette eingeklemmt sein. Indem die Platte über eine Oberkante der Transportpalette vertikal hinausragt, kann sie ein Verschieben der säulenförmigen Transportbehälter in Längsrichtung verhindern. Die Platten können dabei vorzugsweise Siebdruckplatten sein. Zwischen Transportbehälter und Transportpalette können zudem Mittel angeordnet sein, die eine Haftreibung zwischen Transportbehälter und Transportpalette erhöhen, beispielsweise eine rutschfeste Matte.

Dadurch kann vorteilhafter Weise erreicht werden, dass die Transportbehälter in Längsrichtung nicht verrutschen. Somit kann eine Sicherung unterhalb eines Schwerpunkts der Ladungseinheit in Längsrichtung bereits erreicht sein.

Es kann dabei vorgesehen sein, dass der säulenförmige Transportbehälter im Wesentlichen lotrecht auf der Transportpalette angeordnet ist. In anderen Worten bedeutet das, dass die säulenförmigen Transportbehälter jeweils mit ihrer Grundfläche auf der Transportpalette stehend angeordnet sind. Zudem kann vorgesehen sein, dass die Grundfläche der Transportbehälter im Wesentlichen an die Seiten der Transportpaletten angrenzt. Beispielsweise kann ein Transportbehälter mit achteckiger Grundfläche so auf einer im Wesentlichen rechteckigen, vorzugsweise quadratischen Transportpalette angeordnet sein, dass vier der acht Seiten jeweils an eine Seite der Transportpalette angrenzen.

Dadurch kann vorteilhafter Weise erreicht werden, dass eine gute Raumnutzung durch die Ladung erreicht werden kann. Zudem kann dadurch erreicht werden, dass die Transportbehälter in Längsrichtung und in Querrichtung zumindest mit Teilen ihrer Mantelflächen aneinander anliegen. Dadurch kann vorteilhafter Weise erreicht werden, dass die Transportbehälter sich gegenseitig stützen, insbesondere durch Bildung eines Formschlusses.

Es ist dabei zudem vorgesehen, dass die Ladungseinheit in Längsrichtung vor jedem Transportbehälter zumindest einen Sicherungsbalken aufweist, wobei der Sicherungsbalken in Querrichtung ausgerichtet ist und unterhalb einer Oberkante der Ladungseinheit und oberhalb eines Schwerpunktes der Ladungseinheit angeordnet ist, wobei der Sicherungsbalken zur Ladefläche in Längsrichtung verschiebungssicher befestigt ist.

Unter dem Begriff "Sicherungsbalken" ist im Sinne der Erfindung eine längliche Vorrichtung zu verstehen, die insbesondere geeignet ist Kräften orthogonal zur Längsachse des Sicherungsbalkens zu wiederstehen. Ein Sicherungsbalken kann beispielsweise ein Kantholz, eine Bohle, eine Latte, ein Rundstab, ein Vierkantrohr, ein Rundrohr oder ein Profilträger wie ein U-, L-. Z-, T- oder Doppel-T-Profilträger sein. Der Sicherungsbalken kann insbesondere ein Spannbrett, Klemmbrett oder Spannbalken sein mit einer Blockierkraft von wenigstens 350 daN, vorzugsweise wenigstens 500 daN, insbesondere wenigstens 1000 daN.

Im Sinne der Erfindung ist unter "in Längsrichtung vor" zu verstehen, dass in Längsrichtung gesehen zuerst ein Sicherungsbalken und danach ein Transportbehälter angeordnet ist. Zudem ist darunter zu verstehen, dass kein übermäßig großer Abstand zwischen dem Sicherungsbalken und dem Transportbehälter besteht. Dabei kann der Sicherungsbalken vorzugsweise im Wesentlichen an den am Transportbehälter anliegen. Zudem ist darunter zu verstehen, dass zwischen dem Transportbehälter und dem davor angeordneten Sicherungsbalken keine weiteren Transportbehälter angeordnet sind, der Sicherungsbalken also unmittelbar vor dem Transportbehälter angeordnet ist. Dabei kann auch vorgesehen sein, dass ein Sicherungsbalken vor mehr als einem Transportbehälter angeordnet ist. Beispielsweise kann vor zwei Transportbehältern die auf Transportpaletten angeordnet sind, die in Querrichtung nebeneinander angeordnet sind, ein einzelner Sicherungsbalken angeordnet sein.

Unter dem Schwerpunkt der Ladungseinheit ist der geometrische Schwerpunkt oder der Massenschwerpunkt zu verstehen.

Unter "zur Ladefläche in Längsrichtung verschiebungssicher befestigt" ist im Sinne der Erfindung zu verstehen, dass der Sicherungsbalken durch beim Transport übliche horizontale Krafteinwirkung nicht in Längsrichtung zur Ladefläche verschoben werden kann. Beispielsweise kann der Sicherungsbalken an einer Seitenwandung oder einem Plangestell einer Pritsche an der ersten und zweiten Längsseite befestigt sein. In einer bevorzugten Ausgestaltung kann vorgesehen sein, dass der Sicherungsbalken eine Klemmvorrichtung oder eine Verzahnung aufweist, mit der der Sicherungsbalken an seinen Enden an einem Plangestell oder an Seitenwandungen der Ladefläche befestigt werden kann.

Durch derartig angebrachte Sicherungsbalken kann vorteilhafter Weise erreicht werden, dass die Transportbehälter in Längsrichtung gegen Umkippen gesichert sind.

Es ist dabei außerdem vorgesehen, dass die Ladungseinheit ein erstes und ein zweites verkürzbares Sicherungsmittel aufweist, wobei das erste verkürzbare Sicherungsmittel an einem vorderen ersten Zugpunkt hinter einer Vorderkante der Ladungseinheit an der ersten Längsseite der Ladefläche und an einem hinteren ersten Zugpunkt vor einer Hinterkante der Ladungseinheit an der ersten Längsseite der Ladefläche lösbar befestigt ist, wobei das erste verkürzbare Sicherungsmittel von dem vorderen ersten Zugpunkt zum hinteren ersten Zugpunkt im Wesentlichen an der Ladungseinheit anliegend um die Ladungseinheit verläuft, wobei das erste verkürzbare Sicherungsmittel an der Seite der zweiten Längsseite oberhalb von zumindest einem Sicherungsbalken verläuft, und wobei das zweite verkürzbare Sicherungsmittel an einem vorderen zweiten Zugpunkt hinter der Vorderkante der Ladungseinheit an der zweiten Längsseite der Ladefläche und an einem hinteren zweiten Zugpunkt vor der Hinterkante der Ladungseinheit an der zweiten Längsseite der Ladefläche lösbar befestigt ist, wobei das zweite verkürzbare Sicherungsmittel von dem vorderen zweiten Zugpunkt zum hinteren zweiten Zugpunkt im Wesentlichen an der Ladungseinheit anliegend um die Ladungseinheit verläuft, wobei das zweite verkürzbare Sicherungsmittel an der Seite der ersten Längsseite oberhalb von zumindest einem Sicherungsbalken verläuft, wobei die Vorderkante der Ladungseinheit die in Längsrichtung der Heckseite zugewandte Kante der Ladungseinheit ist und die Hinterkante der Ladungseinheit die in Längsrichtung der Stirnseite zugewandte Kante der Ladungseinheit ist.

Unter dem Begriff "verkürzbares Sicherungsmittel" ist im Sinne der Erfindung eine längliche, flexible Vorrichtung zu verstehen, dessen Länge sich einstellen lässt und sich durch Zugkräfte entlang der Länge des verkürzbaren Sicherungsmittels nicht ungewollt verlängert. Beispielsweise kann ein derartiges verkürzbares Sicherungsmittel ein Seil, eine Kette, ein Band oder ein Gurt sein. Insbesondere kann sich eine Verkürzung des Sicherungsmittels mit einem Seilspanner, Kettenspanner oder Gurtspanner erreichen lassen. Vorzugsweise kann das verkürzbare Sicherungsmittel ein Spanngurt oder Zurrgurt sein.

Unter dem Begriff "Zugpunkt" ist im Sinne der Erfindung eine Befestigungsvorrichtung zu verstehen, an der eine Zugkraft anlegbar ist. Dabei kann darunter insbesondere eine Befestigungsvorrichtung verstanden werden, an der eine Befestigung um einen Punkt schwenkbar möglich ist. Beispielsweise kann ein Zugpunkt eine vorgesehene Öffnung als Haltepunkt, eine Öse, ein Haken oder eine Schlaufe sein. Insbesondere kann vorgesehen sein, dass die Befestigungsvorrichtung an einer Längsseite der Ladefläche befestigt ist.

Unter der Vorderkante der Ladungseinheit ist die in Längsrichtung der Heckseite zugewandte Kante der Ladungseinheit zu verstehen. Unter der Hinterkante der Ladungseinheit ist die in Längsrichtung der Stirnseite zugewandte Kante der Ladungseinheit zu verstehen.

Es kann dabei auch erfindungsgemäß vorgesehen sein, dass der vordere erste Zugpunkt und der hintere erste Zugpunkt der gleiche Zugpunkt sind. Ebenso kann vorgesehen sein, dass der vordere zweite Zugpunkt und der hintere zweite Zugpunkt der gleiche Zugpunkt sind.

Zudem ist erfindungsgemäß vorgesehen, dass das erste und/oder zweite verkürzbare Sicherungsmittel auch jeweils von dem hinteren zum vorderen Zugpunkt verlaufen kann, statt vom vorderen zum hinteren Zugpunkt. Dabei kann auch ein verkürzbares Sicherungsmittel vom hinteren zum vorderen Zugpunkt verlaufen und das andere verkürzbare Sicherungsmittel vom vorderen zum hinteren Zugpunkt.

Unter "lösbar befestigt" ist im Sinne der Erfindung zu verstehen, dass die Befestigung gewollt einfach gelöst werden kann, sich aber nicht durch beim Transport übliche Kräfte löst. Beispielsweise kann eine lösbare Befestigung mit einem Knoten, eine Schlaufe, einem Zapfen oder einem Haken realisiert sein.

Unter dem Begriff "im Wesentlichen anliegend" ist zu verstehen, dass das verkürzbare Sicherungsmittel stellenweise an der Ladungseinheit anliegt. Dabei kann das verkürzbare Sicherungsmittel insbesondere an Stellen an der Ladungseinheit anliegen, an denen es durch die Ladungseinheit umgelenkt wird.

Unter einem Verlaufen an der Seite der ersten/zweiten Längsseite oberhalb von zumindest einem Sicherungsbalken ist zu verstehen, dass das entsprechende verkürzbare Sicherungsmittel an einer Seite der Ladungseinheit, die der entsprechenden Längsseite der Ladefläche zugewandt ist, oberhalb von zumindest einem Sicherungsbalken verläuft. Dabei kann das verkürzbare Sicherungsmittel insbesondere direkt oberhalb von dem zumindest einem Sicherungsbalken verlaufen. Vorzugsweise kann das verkürzbare Sicherungsmittel dabei auf dem zumindest einen Sicherungsbalken aufliegen.

Durch derartig angebrachte verkürzbare Sicherungsmittel kann erreicht werden, dass die Transportbehälter in Querrichtung gegen Umkippen gesichert sind. Zudem können die Transportbehälter dadurch zusätzlich in Längsrichtung gegen ein Verschieben und Umkippen gesichert sein. Zudem konnte in überraschender Weise gezeigt werden, dass mit dem vorbeschriebenen Verlauf der verkürzbaren Sicherungsmittel eine Sicherung ohne viel Zugkraft erreicht werden kann. Dabei können die verkürzbaren Sicherungsmittel so gekürzt werden, dass sie die Transportbehälter nicht eindrücken und trotzdem eine ausreichende Sicherung erreicht werden kann.

In einer Ausgestaltung der Erfindung kann vorgesehen sein, dass die Ladungseinheit zwei säulenförmige Transportbehälter und zwei im Wesentlichen rechteckige, vorzugsweise quadratische Transportpaletten aufweist, wobei die Transportpaletten in Längsrichtung hintereinander angeordnet sind und die Ladungseinheit zentral in Querrichtung auf der Ladefläche angeordnet ist.

Dadurch kann erreicht werden, dass lediglich zwei Transportbehälter und zwei Transportpaletten in einem Bereich der Ladefläche angeordnet sind. Es kann dadurch Stellenweise eine geringere Beladung der Ladefläche erreicht werden. Insbesondere kann mit einer derartigen Ladungseinheit die Ladefläche stellenweise weniger belastet und der Ladungsschwerpunkt verschoben, beziehungsweise eingestellt werden.

In einer Ausgestaltung der Erfindung kann vorgesehen sein, dass die Ladungseinheit zwei säulenförmige Transportbehälter und zwei im Wesentlichen rechteckige, vorzugsweise quadratische Transportpaletten aufweist, wobei die Transportpaletten in Querrichtung hintereinander angeordnet sind.

Dadurch kann vorteilhafter Weise erreicht werden, dass die Ladungseinheit in Längsrichtung kürzer ist. Dadurch kann ermöglicht werden, dass die Beladung der Ladefläche flexibler an die Länge der Ladefläche angepasst werden kann.

In einer Ausgestaltung der Erfindung kann vorgesehen sein, dass die Ladungseinheit vier säulenförmige Transportbehälter und vier im Wesentlichen rechteckige Transportpaletten aufweist, wobei die Transportpaletten in Längsrichtung und Querrichtung hintereinander angeordnet sind.

Dadurch kann vorteilhafter Weise erreicht werden, dass die Ladungseinheit möglichst viele Transportbehälter aufweist, ohne die Qualität der Ladungssicherung einzuschränken. Dadurch können insbesondere Sicherungsmaterialien eingespart werden. Insbesondere werden durch eine derartige Ladungseinheit weniger verkürzbare Sicherungsmittel pro Transportpalette benötigt.

Es wird ferner mit der vorliegenden Erfindung eine Anordnung von Ladungseinheiten vorgeschlagen.

Die Anordnung weist eine Mehrzahl von erfindungsgemäßen Ladungseinheiten auf, wobei die Ladungseinheiten in Längsrichtung hintereinander im Wesentlichen aneinander anliegend angeordnet sind.

In anderen Worten werden mehrere der erfindungsgemäßen Ladungseinheiten so auf einer Ladefläche angeordnet, dass in Längsrichtung hinter einer ersten Ladungseinheit zumindest eine zweite Ladungseinheit angeordnet ist, wobei die zweite Ladungseinheit mit ihrer Vorderseite an der Hinterseite der ersten Ladungseinheit anliegt.

Dadurch kann vorteilhafter weise erreicht werden, dass sich die Ladungseinheiten gegenseitig weiter sichern. Insbesondere kann dadurch erreicht werden, dass eine vordere Ladungseinheit jeweils an ihrer Hinterseite zusätzlich durch zumindest einen vorderen Sicherungsbalken einer dahinter angeordneten Ladungseinheit gesichert wird.

In einer Ausgestaltung der Erfindung kann vorgesehen sein, dass eine in Längsrichtung erste Ladungseinheit der Mehrzahl von Ladungseinheiten einen unteren Sicherungsbalken aufweist, wobei der untere Sicherungsbalken vor zumindest einem in Längsrichtung vorderen Transportbehälter der ersten Ladungseinheit in Querrichtung ausgerichtet ist und unterhalb der anderen Sicherungsbalken angeordnet ist, wobei der untere Sicherungsbalken zur Ladefläche in Längsrichtung verschiebungssicher befestigt ist.

Dadurch kann vorteilhafter Weise erreicht werden, dass eine geringere Sicherung der ersten Ladungseinheit wegen dem Fehlen einer davor angeordneten Ladungseinheit ausgeglichen werden kann.

Es kann dabei vorgesehen sein, dass die in Längsrichtung erste Ladungseinheit vorzugsweise eine Ladungseinheit aufweisend vier säulenförmige Transportbehälter und vier im Wesentlichen rechteckige, vorzugsweise quadratische Transportpaletten, wobei die Transportpaletten in Längsrichtung und Querrichtung hintereinander angeordnet sind.

In einer Ausgestaltung der Erfindung kann vorgesehen sein, dass eine in Längsrichtung letzte Ladungseinheit der Mehrzahl von Ladungseinheiten an der Stirnseite der Ladefläche angrenzt.

Dadurch kann vorteilhafter Weise erreicht werden, dass eine geringere Sicherung der letzten Ladungseinheit wegen dem Fehlen einer dahinter angeordneten Ladungseinheit ausgeglichen werden kann.

Es kann dabei vorgesehen sein, dass die in Längsrichtung letzte Ladungseinheit vorzugsweise zwei säulenförmige Transportbehälter und zwei im Wesentlichen rechteckige, vorzugsweise quadratische Transportpaletten aufweist, wobei die Transportpaletten in Längsrichtung hintereinander angeordnet sind und die Ladungseinheit zentral in Querrichtung auf der Ladefläche angeordnet ist.

Dadurch kann vorteilhafter Weise erreicht werden, dass der Ladungsschwerpunkt einer Ladungsverteilung nicht zu nahe an der Stirnseite der Ladefläche ist. Beispielsweise kann dadurch die Last oberhalb des Königszapfens eines Sattelauflegers verringert werden.

In einer Ausgestaltung der Erfindung kann vorgesehen sein, dass eine Ladungseinheit der Mehrzahl von Ladungseinheiten zwei säulenförmige Transportbehälter und zwei im Wesentlichen rechteckige, vorzugsweise quadratische Transportpaletten aufweist, wobei die Transportpaletten in Querrichtung hintereinander angeordnet sind, wobei die Ladungseinheit nicht die in Längsrichtung letzte Ladungseinheit ist, wobei das erste und zweite verkürzbare Sicherungsmittel der Ladungseinheit zusätzlich auch über einen in Längsrichtung nächsten Sicherungsbalken der in Längsrichtung nächsten Ladungseinheit verläuft.

Dadurch kann erreicht werden, dass die verkürzbaren Sicherungsmittel um eine in Querrichtung orthogonal zur Ladefläche verlaufene Ebene im Wesentlichen spiegelsymmetrisch anordenbar sind. Dadurch kann eine vorteilhafte Verteilung der Sicherungsmittel erreicht werden, wodurch eine bessere Sicherung erreicht werden kann.

In einer Ausgestaltung der Erfindung kann vorgesehen sein, dass die Anordnung von Ladungseinheiten in Längsrichtung eine Ladelänge aufweist, wobei die Anordnung eine Ladungseinheit aufweist, die zwei säulenförmige Transportbehälter und zwei im Wesentlichen rechteckige, vorzugsweise quadratische Transportpaletten aufweist, wobei die Transportpaletten in Querrichtung hintereinander angeordnet sind, wenn die Ladelänge ein ungerades Vielfaches einer Länge einer Transportpalette in Längsrichtung ist, und wobei die Anordnung keine Ladungseinheit aufweist, die zwei säulenförmige Transportbehälter und zwei im Wesentlichen rechteckige, vorzugsweise quadratische Transportpaletten aufweist, wobei die Transportpaletten in Querrichtung hintereinander angeordnet sind, wenn die Ladelänge ein gerades Vielfaches einer Länge einer Transportpalette in Längsrichtung ist.

Dadurch kann vorteilhafter Weise eine besonders gute Ladeflächennutzung erreicht werden, wobei zugleich besonders wenig Sicherungsmittel verwendet werden müssen. Insbesondere kann dadurch die größtmögliche Nutzung der Ladefläche erreicht werden bei zugleich der geringsten Zahl an verkürzbaren Sicherungsmitteln.

Es wird ferner mit der Erfindung ein Verfahren zur Ladungssicherung säulenförmiger Transportbehälter vorgeschlagen.

Das Verfahren ist dadurch gekennzeichnet, dass in einer erfindungsgemäßen Anordnung und/oder Ladungseinheit die verkürzbaren Sicherungsmittel gespannt werden.

Entsprechend sind bei dem Verfahren die säulenförmigen Transportbehälter in einer erfindungsgemäßen Anordnung und/oder Ladungseinheit angeordnet und die verkürzbaren Sicherungsmittel werden gespannt.

Ein vorbeschriebenes Verfahren dient somit insbesondere der Ladungssicherung säulenförmiger Transportbehälter.

Es hat sich in überraschender Weise gezeigt, dass mit dem vorbeschriebenen Verfahren die Ladungssicherung säulenförmiger Transportbehälter mit wenigen und üblicherweise verfügbaren Mitteln gut gelingt. Zudem hat sich gezeigt, dass die Transportbehälter bei einem derartigen Verfahren kaum oder gar nicht eingedrückt werden, die Position am Fahrzeug und zueinander nicht nennenswert verändern, das heißt sie nicht rutschen, nicht neigen und nicht kippen.

In einer weiteren Ausgestaltung der Erfindung kann vorgesehen sein, das Verfahren für die Sicherung säulenförmiger Transportbehälter zu verwenden, die ein Schüttgut beinhalten, bevorzugt ein Kunststoffgranulat, insbesondere ein Polystyrolgranulat.

In einer weiteren Ausgestaltung der Erfindung kann vorgesehen sein das Verfahren für die Sicherung von Oktabins zu verwenden.

Insbesondere kann vorgesehen sein, dass Verfahren für die Sicherung von Oktabins zu verwenden, die ein Polystyrolgranulat beinhalten.

Die Erfindung ist nachfolgend anhand der Figuren weiter erläutert.
Fig. 1 zeigt schematisch eine Aufsicht einer erfindungsgemäßen Ladungseinheit.
Fig. 2 zeigt schematisch eine perspektivische Ansicht der erfindungsgemäßen Ladungseinheit aus Fig. 1.
Fig. 3 zeigt schematisch eine Aufsicht einer weiteren erfindungsgemäßen Ladungseinheit.
Fig. 4 zeigt schematisch eine perspektivische Ansicht der erfindungsgemäßen Ladungseinheit aus Fig. 3.
Fig. 5 zeigt schematisch eine Aufsicht einer weiteren erfindungsgemäßen Ladungseinheit.
Fig. 6 zeigt schematisch eine perspektivische Ansicht der erfindungsgemäßen Ladungseinheit aus Fig. 5.
Fig. 7 zeigt schematisch eine perspektivische Ansicht einer erfindungsgemäßen Anordnung.

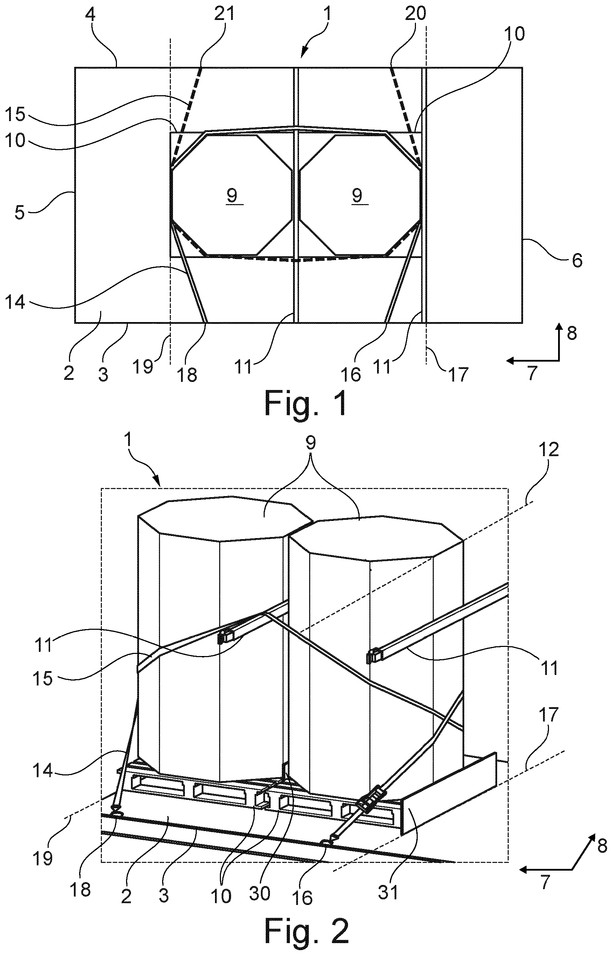

Figuren 1 und 2 betreffen eine erfindungsgemäße Ladungseinheit 1 die auf einer im Wesentlichen rechteckigen Ladefläche 2 angeordnet ist. Die Ladefläche weist eine erste Längsseite 3, eine zweite Längsseite 4, eine Stirnseite 5 und eine Heckseite 6 auf. Dabei verläuft eine Längsrichtung 7 von der Heckseite 6 zur Stirnseite 5 und eine Querrichtung 8 von der ersten Längsseite 3 zur zweiten Längsseite 4. Die Ladungseinheit ist zentral in Querrichtung 8 auf der Ladefläche 2 angeordnet.

Die Ladungseinheit 1 weist zwei säulenförmige Transportbehälter 9, die in der gezeigten Ausführungsform Oktabins sind, und zwei im Wesentlichen rechteckige, vorzugsweise quadratische Transportpaletten 10 auf. Die Transportpaletten 10 sind entlang der Längsrichtung 7 im Wesentlichen in Flucht zueinander auf der Ladefläche 2 angeordnet. Dabei ist auf jeder Transportpalette 10 jeweils einer der säulenförmigen Transportbehälter 9 zu der jeweiligen Transportpalette 10 in Längsrichtung 7 verschiebungssicher angeordnet.

In Längsrichtung 7 ist vor jedem Transportbehälter 9 jeweils ein Sicherungsbalken 11 angeordnet. Die Sicherungsbalken 11 sind in Querrichtung 8 ausgerichtet und unterhalb einer Oberkante 12 der Ladungseinheit 1 und oberhalb eines Schwerpunktes (nicht gezeigt) der Ladungseinheit angeordnet und zur Ladefläche in Längsrichtung verschiebungssicher befestigt (nicht gezeigt).

Ein erstes verkürzbares Sicherungsmittel 14 ist an einem vorderen ersten Zugpunkt 16 hinter einer Vorderkante 17 der Ladungseinheit 1 an der ersten Längsseite 3 der Ladefläche 2 und an einem hinteren ersten Zugpunkt 18 vor einer Hinterkante 19 der Ladungseinheit 1 an der ersten Längsseite 3 der Ladefläche 1 lösbar befestigt, wobei die Vorderkante 17 der Ladungseinheit 1 die in Längsrichtung 7 der Heckseite 6 zugewandte Kante der Ladungseinheit 1 ist und die Hinterkante 19 der Ladungseinheit 1 die in Längsrichtung 7 der Stirnseite 5 zugewandte Kante der Ladungseinheit 1 ist. Das erste verkürzbare Sicherungsmittel 14 verläuft von dem vorderen ersten Zugpunkt 16 zum hinteren ersten Zugpunkt 18 im Wesentlichen an der Ladungseinheit 1 anliegend um die Ladungseinheit 1, wobei das erste verkürzbare Sicherungsmittel 14 an der Seite der zweiten Längsseite 4 oberhalb von dem in Längsrichtung 7 hinteren Sicherungsbalken 11 verläuft. Ein zweites verkürzbares Sicherungsmittel 15 ist an einem vorderen zweiten Zugpunkt 20 hinter einer Vorderkante 17 der Ladungseinheit 1 an der zweiten Längsseite 4 der Ladefläche 2 und an einem hinteren zweiten Zugpunkt 21 vor einer Hinterkante 19 der Ladungseinheit 1 an der zweiten Längsseite 4 der Ladefläche 1 lösbar befestigt. Das zweite verkürzbare Sicherungsmittel 15 verläuft von dem vorderen zweiten Zugpunkt 20 zum hinteren zweiten Zugpunkt 21 im Wesentlichen an der Ladungseinheit 1 anliegend um die Ladungseinheit 1, wobei das zweite verkürzbare Sicherungsmittel 15 an der Seite der ersten Längsseite 3 oberhalb von dem in Längsrichtung 7 hinteren Sicherungsbalken 11 verläuft.

Zur verschiebungssicheren Anordnung ist bei der in Fig. 2 gezeigten Ausgestaltung eine Sperre 30 vorgesehen, die vor bzw. hinter der Transportpalette 10 angeordnet ist. Die Sperre 30 ist dabei in Form einer Platte ausgeführt. Die Platte ist im Wesentlichen rechteckig und liegt mit einer Längsseite auf der Ladefläche auf. Dabei kann die Sperre 30 an die Transportpalette 10 angeklemmt sein beziehungsweise zwischen der Transportpalette 10 und beispielsweise einer nächsten oder vorherigen Transportpalette 10 eingeklemmt sein. Indem die Sperre 30 über eine Oberkante der Transportpalette vertikal hinausragt, kann sie ein Verschieben der säulenförmigen Transportbehälter in Längsrichtung verhindern. Die Platten können dabei vorzugsweise Siebdruckplatten sein. Hinter der in Längsrichtung der Ladefläche zweiten Transportpalette 10 ist eine weitere Sperre / Platte 31 angeordnet. In der in der Fig. 2 gezeigten Ausgestaltung ist die Sperre 31 länger als die erste Sperre 30. Hierdurch ist es möglich mit einer Sperre 31 zwei nebeneinander angeordnete Transportpaletten 10 bzw. die auf diesen Transportpaletten angeordneten Transportbehälter gegen Verschieben zu sichern.

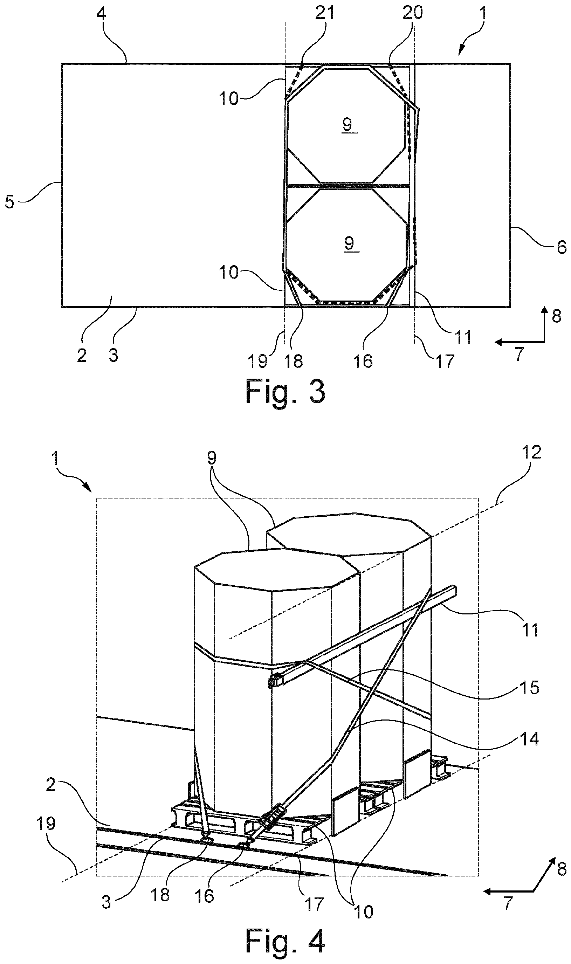

Figuren 3 und 4 betreffen eine erfindungsgemäße Ladungseinheit 1, die sich von der Ladungseinheit aus den Figuren 1 und 2 dadurch unterscheidet, dass die Transportpaletten 10 entlang der Querrichtung 8 in Flucht zueinander auf der Ladefläche 2 angeordnet sind. In Längsrichtung 7 ist vor den Transportbehältern 9 ein Sicherungsbalken 11 angeordnet. Der Sicherungsbalken 11 ist in Querrichtung 8 ausgerichtet und unterhalb einer Oberkante 12 der Ladungseinheit 1 und oberhalb eines Schwerpunktes (nicht gezeigt) der Ladungseinheit angeordnet und zur Ladefläche in Längsrichtung verschiebungssicher befestigt (nicht gezeigt). Das erste verkürzbare Sicherungsmittel 14 verläuft an der Seite der zweiten Längsseite 4 oberhalb von dem Sicherungsbalken 11. Das zweite verkürzbare Sicherungsmittel 15 verläuft an der Seite der ersten Längsseite 3 oberhalb von dem Sicherungsbalken 11.

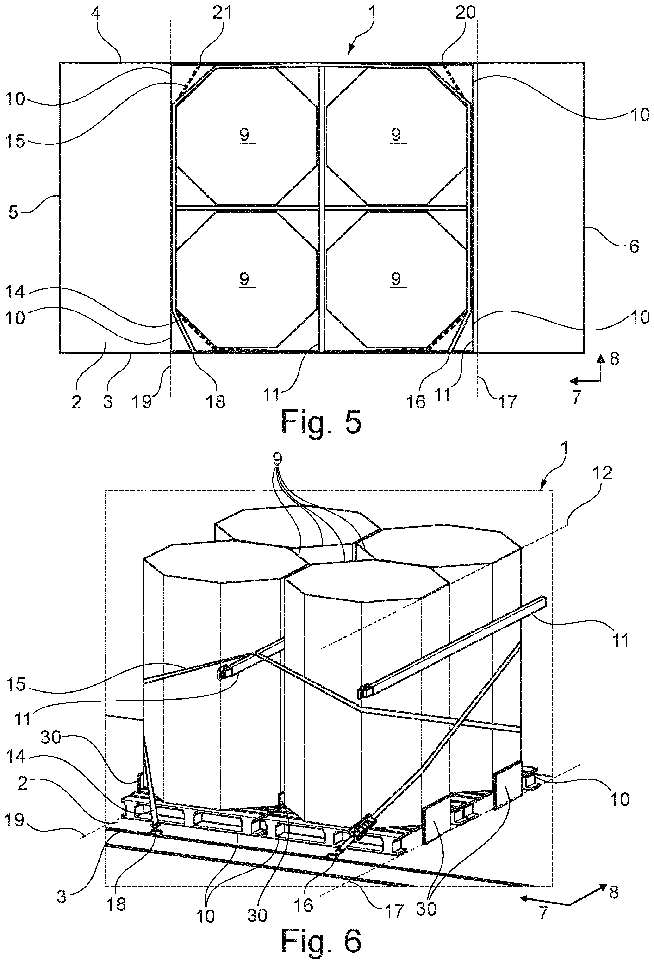

Figuren 5 und 6 betreffen eine erfindungsgemäße Ladungseinheit 1, die sich von den Ladungseinheiten aus den Figuren 1, 2, 3 und 4 dadurch unterscheidet, dass die Ladungseinheit 1 vier säulenförmige Transportbehälter 9 und vier im Wesentlichen rechteckige, vorzugsweise quadratische Transportpaletten 10 aufweist. Die Transportpaletten 10 sind entlang der Längsrichtung 7 und entlang der Querrichtung 8 im Wesentlichen in Flucht zueinander auf der Ladefläche 2 angeordnet. In Längsrichtung 7 ist vor jeweils zwei in Querrichtung hintereinander angeordneten Transportbehälter 9 jeweils ein Sicherungsbalken 11 angeordnet. Die Ladungseinheit 1 weist entsprechend 2 Sicherungsbalken 11 auf.

Das erste verkürzbare Sicherungsmittel 14 verläuft an der Seite der zweiten Längsseite 4 oberhalb von dem in Längsrichtung 7 hinteren Sicherungsbalken 11. Das zweite verkürzbare Sicherungsmittel 15 verläuft an der Seite der ersten Längsseite 3 oberhalb von dem in Längsrichtung 7 hinteren Sicherungsbalken 11.

Zur verschiebungssicheren Anordnung sind bei der in Fig. 6 gezeigten Ausgestaltung Sperren 30 vorgesehen, die vor bzw. hinter der Transportpaletten 10 angeordnet sind. Die Sperren 30 sind dabei in Form einer Platte ausgeführt. Die Platte ist im Wesentlichen rechteckig und liegt mit einer Längsseite auf der Ladefläche auf. Dabei können die Sperren 30 an die Transportpaletten 10 angeklemmt sein beziehungsweise zwischen den Transportpaletten 10 und beispielsweise einer nächsten oder vorherigen Transportpalette 10 eingeklemmt sein. Indem die Sperren 30 über eine Oberkante der Transportpalette vertikal hinausragen, können sie ein Verschieben der säulenförmigen Transportbehälter in Längsrichtung verhindern. Die Platten können dabei vorzugsweise Siebdruckplatten sein.

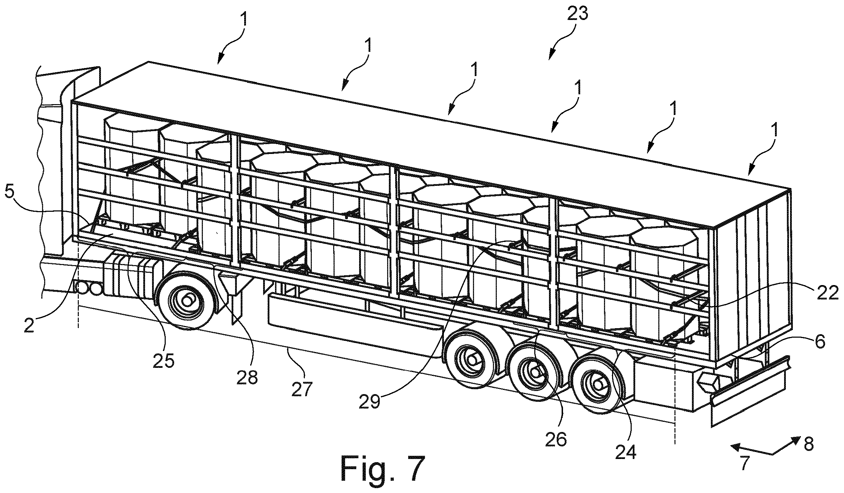

Figur 7 betrifft eine erfindungsgemäße Anordnung 23 von Ladungseinheiten 1. Die Ladefläche ist dabei die Ladefläche eines Sattelaufliegers. Die Anordnung weist sechs Ladungseinheiten 1 auf, die auf der Ladefläche 2 in Längsrichtung 7 hintereinander im Wesentlichen aneinander anliegend angeordnet sind.

Die in Längsrichtung 7 erste Ladungseinheit 24 weist zusätzlich einen unteren Sicherungsbalken 22 auf und ist eine Ladungseinheit 1 mit vier im Wesentlichen rechteckigen, vorzugsweise quadratische Transportpaletten 10.

Die in Längsrichtung letzte Ladungseinheit 25 weist zwei im Wesentlichen rechteckige, vorzugsweise quadratische Transportpaletten 10 auf, die in Längsrichtung 7 hintereinander angeordnet sind. Dabei grenzt die letzte Ladungseinheit 25 an die Stirnseite 5 der Ladefläche 2 an.

Eine in Längsrichtung 7 nicht letzte Ladungseinheit 26 weist zwei Transportpaletten 10 auf, die entlang der Querrichtung 8 in Flucht zueinander auf der Ladefläche 2 angeordnet sind. Diese nicht letzte Ladungseinheit 26 ist in der gezeigten Ausführungsform die in Längsrichtung 7 zweite Ladungseinheit 1. Das erste verkürzbare Sicherungsmittel 14 verläuft zusätzlich auch über einen in Längsrichtung 7 nächsten Sicherungsbalken 29 der in Längsrichtung 7 nächsten Ladungseinheit 1. Die in Längsrichtung 7 nächste Ladungseinheit 1 ist in der gezeigten Ausführungsform die dritte Ladungseinheit 1. Das zweite verkürzbare Sicherungsmittel 15 verläuft ebenso zusätzlich über den in Längsrichtung 7 nächsten Sicherungsbalken 29 der in Längsrichtung 7 nächsten Ladungseinheit 1.

Die gezeigte Ausführungsform weist dabei eine Ladelänge 27 auf, die ein ungerades Vielfaches der Länge 28 einer Transportpalette 10 ist, weswegen die nicht letzte Ladungseinheit 26 zwei Transportpaletten 10 aufweist, die entlang der Querrichtung 8 in Flucht zueinander auf der Ladefläche 2 angeordnet sind.

### Bezugszeichen:

- 1: Ladungseinheit
- 2: Ladefläche
- 3: erste Längsseite
- 4: zweite Längsseite
- 5: Stirnseite
- 6: Heckseite
- 7: Längsrichtung
- 8: Querrichtung
- 9: säulenförmiger Transportbehälter
- 10: im Wesentlichen rechteckige, vorzugsweise quadratische Transportpalette
- 11: Sicherungsbalken
- 12: Oberkante der Ladungseinheit
- 13: Schwerpunkt der Ladungseinheit
- 14: erstes verkürzbares Sicherungsmittel
- 15: zweites verkürzbares Sicherungsmittel
- 16: vorderer erster Zugpunkt
- 17: Vorderkante der Ladungseinheit
- 18: hinterer erster Zugpunkt
- 19: Hinterkante der Ladungseinheit
- 20: vorderer zweiter Zugpunkt
- 21: hinterer zweiter Zugpunkt
- 22: unterer Sicherungsbalken
- 23: Anordnung
- 24: in Längsrichtung erste Ladungseinheit
- 25: in Längsrichtung letzte Ladungseinheit
- 26: in Längsrichtung nicht letzte Ladungseinheit
- 27: Ladelänge
- 28: Länge der Transportpalette
- 29: in Längsrichtung nächster Sicherungsbalken
- 30: Sperre / Platte
- 31: Sperre / Platte

## Patentansprüche

1. Ladungseinheit (1) säulenförmiger Transportbehälter (9), wobei die Ladungseinheit (1) auf einer im Wesentlichen rechteckigen Ladefläche (2) angeordnet ist, wobei die Ladefläche (2) eine erste Längsseite (3), eine zweite Längsseite (4), eine Stirnseite (5) und eine Heckseite (6) aufweist, wobei eine Längsrichtung (7) von der Heckseite (6) zur Stirnseite (5) verläuft und eine Querrichtung (8) von der ersten Längsseite (3) zur zweiten Längsseite (4) verläuft,
wobei die Ladungseinheit (1) eine Mehrzahl säulenförmiger Transportbehälter (9) und eine Mehrzahl im Wesentlichen rechteckiger, vorzugsweise quadratischer Transportpaletten (10) aufweist, wobei die Transportpaletten (10) entlang der Längsrichtung (7) und/oder Querrichtung (8) im Wesentlichen in Flucht zueinander auf der Ladefläche (2) angeordnet sind, wobei jeweils höchstens zwei der Transportpaletten (10) entlang der Längsrichtung (7) und jeweils höchstens zwei der Transportpaletten (10) entlang der Querrichtung (8) hintereinander angeordnet sind, wobei auf jeder Transportpalette (10) jeweils einer der säulenförmigen Transportbehälter (9) zu der jeweiligen Transportpalette (10) in Längsrichtung (7) verschiebungssicher angeordnet ist,
**dadurch gekennzeichnet, dass**
die Ladungseinheit (1) in Längsrichtung (7) vor jedem Transportbehälter (9) zumindest einen Sicherungsbalken (11) aufweist, wobei der Sicherungsbalken (11) in Querrichtung (8) ausgerichtet ist und unterhalb einer Oberkante (12) der Ladungseinheit (1) und oberhalb eines Schwerpunktes (13) der Ladungseinheit (1) angeordnet ist, wobei der Sicherungsbalken (11) zur Ladefläche (2) in Längsrichtung (7) verschiebungssicher befestigt ist,
und dass die Ladungseinheit (1) ein erstes und ein zweites verkürzbares Sicherungsmittel (14,15) aufweist,
wobei das erste verkürzbare Sicherungsmittel (14) an einem vorderen ersten Zugpunkt (16) hinter einer Vorderkante (17) der Ladungseinheit (1) an der ersten Längsseite (3) der Ladefläche (2) und an einem hinteren ersten Zugpunkt (18) vor einer Hinterkante (19) der Ladungseinheit (1) an der ersten Längsseite (3) der Ladefläche (2) lösbar befestigt ist, wobei das erste verkürzbare Sicherungsmittel (14) von dem vorderen ersten Zugpunkt (16) zum hinteren ersten Zugpunkt (18) im Wesentlichen an der Ladungseinheit (1) anliegend um die Ladungseinheit (1) verläuft, wobei das erste verkürzbare Sicherungsmittel (14) an der Seite der zweiten Längsseite (4) oberhalb von zumindest einem Sicherungsbalken (11) verläuft,
wobei das zweite verkürzbare Sicherungsmittel (15) an einem vorderen zweiten Zugpunkt (20) hinter der Vorderkante (17) der Ladungseinheit (1) an der zweiten Längsseite (4) der Ladefläche (2) und an einem hinteren zweiten Zugpunkt (21) vor der Hinterkante (19) der Ladungseinheit (1) an der zweiten Längsseite (4) der Ladefläche (2) lösbar befestigt ist, wobei das zweite verkürzbare Sicherungsmittel (15) von dem vorderen zweiten Zugpunkt (20) zum hinteren zweiten Zugpunkt (21) im Wesentlichen an der Ladungseinheit (1) anliegend um die Ladungseinheit (1) verläuft, wobei das zweite verkürzbare Sicherungsmittel (15) an der Seite der ersten Längsseite (3) oberhalb von zumindest einem Sicherungsbalken (11) verläuft,
wobei die Vorderkante (17) der Ladungseinheit (1) die in Längsrichtung (7) der Heckseite (6) zugewandte Kante der Ladungseinheit (1) ist und die Hinterkante (19) der Ladungseinheit (1) die in Längsrichtung (7) der Stirnseite (5) zugewandte Kante der Ladungseinheit (1) ist.

2. Ladungseinheit (1) nach Anspruch 1, wobei die Ladungseinheit (1) zwei säulenförmige Transportbehälter (9) und zwei im Wesentlichen rechteckige, vorzugsweise quadratische Transportpaletten (10) aufweist, wobei die Transportpaletten (10) in Längsrichtung (7) hintereinander angeordnet sind und die Ladungseinheit (1) zentral in Querrichtung (8) auf der Ladefläche (2) angeordnet ist.

3. Ladungseinheit (1) nach Anspruch 1, wobei die Ladungseinheit (1) zwei säulenförmige Transportbehälter (9) und zwei im Wesentlichen rechteckige, vorzugsweise quadratische Transportpaletten (10) aufweist, wobei die Transportpaletten (10) in Querrichtung (8) hintereinander angeordnet sind.

4. Ladungseinheit (1) nach Anspruch 1, wobei die Ladungseinheit (1) vier säulenförmige Transportbehälter (9) und vier im Wesentlichen rechteckige, vorzugsweise quadratische Transportpaletten (10) aufweist, wobei die Transportpaletten (10) in Längsrichtung (7) und Querrichtung (8) hintereinander angeordnet sind.

5. Anordnung (23) von Ladungseinheiten (1), aufweisend eine Mehrzahl von Ladungseinheiten (1) nach einem oder mehreren der vorherigen Ansprüche, wobei die Ladungseinheiten (1) in Längsrichtung (7) hintereinander im Wesentlichen aneinander anliegend angeordnet sind.

6. Anordnung (23) von Ladungseinheiten (1) nach Anspruch 5, wobei eine in Längsrichtung (7) erste Ladungseinheit (24) der Mehrzahl von Ladungseinheiten einen unteren Sicherungsbalken (22) aufweist, wobei der untere Sicherungsbalken (22) vor zumindest einem in Längsrichtung (7) vorderen Transportbehälter (9) der ersten Ladungseinheit in Querrichtung (8) ausgerichtet ist und unterhalb der anderen Sicherungsbalken (11) angeordnet ist, wobei der untere Sicherungsbalken (22) zur Ladefläche (2) in Längsrichtung (7) verschiebungssicher befestigt ist, wobei die in Längsrichtung (7) erste Ladungseinheit (24) vorzugsweise eine Ladungseinheit nach Anspruch 4 ist.

7. Anordnung (23) von Ladungseinheiten (1) nach einem der Ansprüche 5 und 6, wobei eine in Längsrichtung (7) letzte Ladungseinheit (25) der Mehrzahl von Ladungseinheiten (1) an der Stirnseite (5) der Ladefläche (2) angrenzt, wobei die in Längsrichtung (7) letzte Ladungseinheit (25) vorzugsweise eine Ladungseinheit nach Anspruch 2 ist.

8. Anordnung (23) von Ladungseinheiten (1) nach einem der Ansprüche 5 bis 7, wobei eine Ladungseinheit (26) der Mehrzahl von Ladungseinheiten (1) eine Ladungseinheit (1) nach Anspruch 3 ist, wobei die Ladungseinheit nicht die in Längsrichtung (7) letzte Ladungseinheit (25) ist, wobei das erste und zweite verkürzbare Sicherungsmittel (14,15) der Ladungseinheit (26) zusätzlich auch über einen in Längsrichtung (7) nächsten Sicherungsbalken (29) der in Längsrichtung (7) nächsten Ladungseinheit (1) verläuft.

9. Anordnung (23) von Ladungseinheiten (1) nach einem der Ansprüche 5 bis 8, wobei die Anordnung (23) von Ladungseinheiten (1) in Längsrichtung (7) eine Ladelänge (27) aufweist, wobei die Anordnung (23) eine Ladungseinheit (1) nach Anspruch 3 aufweist, wenn die Ladelänge (27) ein ungerades Vielfaches einer Länge einer Transportpalette (10) in Längsrichtung (7) ist, und wobei die Anordnung (23) keine Ladungseinheit (1) nach Anspruch 3 aufweist, wenn die Ladelänge (27) ein gerades Vielfaches einer Länge (28) einer Transportpalette (10) in Längsrichtung (7) ist.

10. Verfahren zur Ladungssicherung säulenförmiger Transportbehälter (9), **dadurch gekennzeichnet, dass** in einer Ladungseinheit (1) nach einem der Ansprüche 1-4 und/oder in einer Anordnung nach einem der Ansprüche 5-9 die verkürzbaren Sicherungsmittel (14,15) gespannt werden.

## Claims

1. Load unit (1) of columnar transport containers (9), wherein the load unit (1) is arranged on a substantially rectangular loading surface (2), wherein the loading surface (2) has a first longitudinal side (3), a second longitudinal side (4), a front side (5) and a rear side (6), wherein a longitudinal direction (7) extends from the rear side (6) to the front side (5) and a transverse direction (8) extends from the first longitudinal side (3) to the second longitudinal side (4),
wherein the load unit (1) comprises a plurality of columnar transport containers (9) and a plurality of essentially rectangular, preferably square transport pallets (10), wherein the transport pallets (10) are arranged on the loading surface (2) along the longitudinal direction (7) and/or transverse direction (8) essentially flush to each other, wherein at most two of the transport pallets (10) are arranged along the longitudinal direction (7) and at most two of the transport pallets (10) are arranged along the transverse direction (8) one behind the other, wherein a respective one of the columnar transport containers (9) is arranged on each transport pallet (10) such that it is protected against displacement in the longitudinal direction (7) with respect to the corresponding transport pallet (10),
**characterized in that**
the load unit (1) comprises at least one securing bar (11) in the longitudinal direction (7) in front of each transport container (9), wherein the securing bar (11) is aligned in the transverse direction (8) and is arranged below an upper edge (12) of the load unit (1) and above a center of gravity (13) of the load unit (1), wherein the securing bar (11) is fixed such that it is protected against displacement in the longitudinal direction (7) with respect to the loading surface (2), and
that the load unit (1) comprises a first and a second shortenable securing means (14, 15),
wherein the first shortenable securing means (14) is attached releasably at a front first tensioning point (16) behind a front edge (17) of the load unit (1) on the first longitudinal side (3) of the loading surface (2) and at a rear first tensioning point (18) in front of a rear edge (19) of the load unit (1) on the first longitudinal side (3) of the loading surface (2), wherein the first shortenable securing means (14) extends essentially abutting against the load unit (1) around the load unit (1) from the front first tensioning point (16) to the rear, first tensioning point (18), wherein the first shortenable securing means (14) extends on the side of the second longitudinal side (4) above at least one securing bar (11),
wherein the second shortenable securing means (15) is attached releasably at a front second tensioning point (20) behind the front edge (17) of the load unit (1) at the second longitudinal side (4) of the loading surface (2) and at a rear second tensioning point (21) in front of the rear edge (19) of the load unit (1) at the second longitudinal side (4) of the loading surface (2), wherein the second shortenable securing means (15) extends essentially abutting against the load unit (1) around the load unit (1) from the front second tensioning point (20) to the rear second tensioning point (21), wherein the second shortenable securing means (15) extends at the side of the first longitudinal side (3) above at least one securing bar (11),
wherein the front edge (17) of the load unit (1) is the edge of the load unit (1) facing the rear side (6) in the longitudinal direction (7) and the rear edge (19) of the load unit (1) is the edge of the load unit (1) facing the front side (5) in the longitudinal direction (7).

2. Load unit (1) according to claim 1, wherein the load unit (1) comprises two columnar transport containers (9) and two substantially rectangular, preferably square transport pallets (10), wherein the transport pallets (10) are arranged one behind the other in the longitudinal direction (7) and the load unit (1) is arranged centrally in the transverse direction (8) on the loading surface (2).

3. Load unit (1) according to claim 1, wherein the load unit (1) comprises two columnar transport containers (9) and two substantially rectangular, preferably square transport pallets (10), wherein the transport pallets (10) are arranged one behind the other in the transverse direction (8).

4. Load unit (1) according to claim 1, wherein the load unit (1) comprises four columnar transport containers (9) and four substantially rectangular, preferably square transport pallets (10), wherein the transport pallets (10) are arranged one behind the other in the longitudinal direction (7) and in the transverse direction (8).

5. Assembly (23) of load units (1), comprising a plurality of load units (1) according to one or more of the preceding claims, wherein the load units (1) are arranged one behind the other, essentially abutting against each other, in the longitudinal direction (7).

6. Assembly (23) of load units (1) according to claim 5, wherein a first load unit (24) in the longitudinal direction (7) of the plurality of load units comprises a lower securing bar (22), wherein the lower securing bar (22) is aligned in the transverse direction (8) in front of at least one transport container (9) of the first load unit disposed at the front in the longitudinal direction (7) and is disposed below the other securing bars (11), wherein the lower securing bar (22) is attached protected against displacement with respect to the loading surface (2) in the longitudinal direction (7), wherein the first load unit (24) in the longitudinal direction (7) is preferably a load unit according to claim 4.

7. Assembly (23) of load units (1) according to any one of claims 5 and 6, wherein a last load unit (25) in the longitudinal direction (7) of the plurality of load units (1) adjoins the plurality of load units (1) at the front face (5) of the loading surface (2), wherein the last load unit (25) in the longitudinal direction (7) is preferably a load unit according to claim 2.

8. Assembly (23) of load units (1) according to any one of claims 5 to 7, wherein one load unit (26) of the plurality of load units (1) is a load unit (1) according to claim 3, wherein the load unit is not the last load unit (25) in the longitudinal direction (7), wherein the first and second shortenable securing means (14, 15) of the load unit (26) in addition also extend over a securing bar (29) which is next in the longitudinal direction (7) of the next load unit (1) in the longitudinal direction (7).

9. Assembly (23) of load units (1) according to any one of claims 5 to 8, wherein the assembly (23) of load units (1) has a loading length (27) in the longitudinal direction (7), wherein the assembly (23) is a load unit (1) according to claim 3, if the loading length (27) is an odd multiple of a length of a transport pallet (10) in the longitudinal direction (7), and wherein the assembly (23) does not comprise a load unit (1) according to claim 3, if the loading length (27) is an even multiple of a length (28) of a transport pallet (10) in the longitudinal direction (7).

10. Method for load securing of columnar transport containers (9), **characterized in that** in a load unit (1) according to any one of claims 1 to 4 and/or in an assembly according to any one of claims 5 to 9 the shortenable securing means (14,15) are tensioned.

## Revendications

1. Unité de charge (1) de récipients de transport (9) en forme de colonnes, où l'unité de charge (1) est disposée sur une surface de chargement (2) essentiellement rectangulaire, dans laquelle la surface de chargement (2) présente une première face longitudinale (3), une deuxième face longitudinale (4), une face avant (5) et une face arrière (6), dans laquelle une direction longitudinale s'étend de la face arrière (6) jusqu'à la face avant (5) et une direction transversale (8) s'étend de la première face longitudinale (3) jusqu'à la deuxième face longitudinale (4),
l'unité de charge (1) présentant une multiplicité de récipients de transport (9) en forme de colonnes et une multiplicité de palettes de transport (10) essentiellement rectangulaires, de préférence carrées, dans laquelle les palettes de transport (10) sont disposées sur la surface de chargement (2) le long de la direction de transport (7), et/ou de la direction transversale (8), essentiellement alignées les unes par rapport aux autres, dans laquelle, respectivement, au maximum deux des palettes de transport (10) sont disposées l'une derrière l'autre le long de la direction longitudinale (7) et respectivement au maximum deux des palettes de transport (10) sont disposées l'une derrière l'autre le long de la direction transversale (8), dans laquelle un des récipients de transport (9) en forme de colonne est respectivement disposé sur chaque palette de transport (10) en étant maintenu en place par rapport à la palette de transport (10) respective dans la direction longitudinale (7),
**caractérisée en ce que**
l'unité de charge (1) présente au moins une barre de fixation (11) dans la direction longitudinale (7) avant chaque récipient de transport (9), dans laquelle la barre de fixation (11) est orientée dans la direction transversale (8) et est disposée en-dessous d'un bord supérieur (12) de l'unité de charge (1) et au-dessus d'un barycentre (13) de l'unité de charge (1), dans laquelle la barre de fixation (11) est fixée en étant maintenue en place dans la direction longitudinale (7) par rapport à la surface de chargement (2),
et que l'unité de charge (1) présente un premier et un deuxième systèmes de fixation (14, 15) pouvant être raccourcis,
dans laquelle le premier système de fixation (14) pouvant être raccourci est fixé de manière amovible à un premier point de traction avant (16) derrière le bord avant (17) de l'unité de charge (1) au niveau de la première face longitudinale (3) de la surface de chargement (2) et à un premier point de traction arrière (18) avant le bord arrière (19) de l'unité de charge (1) au niveau de la première face longitudinale (3) de la surface de chargement (2), dans laquelle le premier système de fixation (14) pouvant être raccourci s'étend essentiellement plaqué contre l'unité de charge (1) autour de l'unité de charge (1) à partir du premier point de traction avant (16) jusqu'au premier point de traction arrière (18), dans laquelle le premier système de fixation (14) pouvant être raccourci s'étend au-dessus d'au moins une barre de fixation (11) sur le côté de la deuxième face longitudinale (4),
dans laquelle le deuxième système de fixation (15) pouvant être raccourci est fixé de manière amovible à un deuxième point de traction avant (20) derrière le bord avant (17) de l'unité de charge (1) au niveau de la deuxième face longitudinale (4) de la surface de chargement (2) et à un deuxième point de traction arrière (21) avant le bord arrière (19) de l'unité de charge (1) au niveau de la deuxième face longitudinale (4) de la surface de chargement (2), dans laquelle le deuxième système de fixation (15) pouvant être raccourci s'étend essentiellement plaqué contre l'unité de charge (1) autour de l'unité de charge (1) à partir du deuxième point de traction avant (20) jusqu'au deuxième point de traction arrière (21), dans laquelle le deuxième système de fixation (15) pouvant être raccourci s'étend au-dessus d'au moins une barre de fixation (11) sur le côté de la première face longitudinale (3),
dans laquelle le bord avant (17) de l'unité de charge (1) est le bord de l'unité de charge (1) orienté dans la direction longitudinale (7) de la face arrière (6) et le bord arrière (19) de l'unité de charge (1) est le bord de l'unité de charge (1) orienté dans la direction longitudinale (7) de la face avant (5).

2. Unité de charge (1) selon la revendication 1, où l'unité de charge (1) présente deux récipients de transport (9) en forme de colonnes et deux palettes de transport (10) essentiellement rectangulaires, de préférence carrées, dans laquelle les palettes de transport (10) sont disposées les unes derrière les autres dans la direction longitudinale (7) et l'unité de charge (1) est disposée de manière centrale dans la direction transversale (8) sur la surface de chargement (2).

3. Unité de charge (1) selon la revendication 1, où l'unité de charge (1) présente deux récipients de transport (9) en forme de colonnes et deux palettes de transport (10) essentiellement rectangulaires, de préférence carrées, dans laquelle les palettes de transport (10) sont disposées les unes derrière les autres dans la direction transversale (8).

4. Unité de charge (1) selon la revendication 1, où l'unité de charge (1) présente quatre récipients de transport (9) en forme de colonnes et quatre palettes de transport (10) essentiellement rectangulaires, de préférence carrées, dans laquelle les palettes de transport (10) sont disposées les unes derrière les autres dans la direction transversale (8).

5. Ensemble (23) d'unités de charge (1) présentant une multiplicité d'unités de charge (1) selon une ou plusieurs parmi les revendications précédentes, dans lequel les unités de charge (1) sont disposées les unes derrière les autres essentiellement de manière alignée dans la direction longitudinale (7).

6. Ensemble (23) d'unités de charge (1) selon la revendication 5, dans lequel une première unité de charge (24) de la multiplicité d'unités de charge présente une barre de fixation inférieure (22) dans la direction longitudinale (7), dans lequel la barre de fixation inférieure (22) est orientée dans la direction transversale (8) avant au moins un récipient de transport (9) frontal de la première unité de charge dans la direction longitudinale (7) et est disposée en-dessous de l'autre barre de fixation (11), dans lequel la barre de fixation inférieure (22) est fixée maintenue en place dans la direction longitudinale (7) par rapport à la surface de chargement (2), dans lequel la première unité de charge (24) dans la direction longitudinale (7) est de préférence une unité de charge selon la revendication 4.

7. Ensemble (23) d'unités de charge (1) selon l'une des revendications 5 et 6, dans lequel une dernière unité de charge (25) de la multiplicité des unités de charge (1) dans la direction longitudinale (7) est limite avec la face avant (5) de la surface de chargement (2), dans lequel la dernière unité de charge (25) dans la direction longitudinale (7) est de préférence une unité de charge selon la revendication 2.

8. Ensemble (23) d'unités de charge (1) selon l'une des revendications 5 à 7, dans lequel une unité de charge (26) de la multiplicité des unités de charge (1) est une unité de charge (1) selon la revendication 3, dans lequel l'unité de charge n'est pas la dernière unité de charge (25) dans la direction longitudinale (7), dans lequel les premier et deuxième systèmes de fixation (14, 15) pouvant être raccourcis de l'unité de charge (26) s'étendent en plus également sur une barre de fixation (29) suivante dans la direction longitudinale (7) de l'unité de charge (1) suivante dans la direction longitudinale (7).

9. Ensemble (23) d'unités de charge (1) selon l'une des revendications 5 à 8, où l'ensemble (23) d'unités de charge (1) présente une longueur de chargement (27) dans la direction longitudinale (7), où l'ensemble (23) présente une unité de charge (1) selon la revendication 3 lorsque la longueur de chargement (27) est un multiple non entier d'une longueur d'une palette de transport (10) dans la direction longitudinale (7), et où l'ensemble (23) ne présente aucune unité de charge (1) selon la revendication 3 lorsque la longueur de chargement (27) est un multiple entier d'une longueur (28) d'une palette de transport (10) dans la direction longitudinale (7).

10. Procédé de sécurisation de la charge de récipients de transport (9) en forme de colonnes, **caractérisé en ce que** des systèmes de fixation (14, 15) pouvant être raccourcis sont mis sous tension dans une unité de charge (1) selon l'une des revendications 1 à 4, et/ou dans un ensemble selon l'une des revendications 5 à 9.
